Europäisches Patentamt

European Patent Office

Office européen des brevets

(19)

(11) Numéro de publication : **0 017 569**
**B1**

(12) **FASCICULE DE BREVET EUROPÉEN**

(45) Date de publication du fascicule du brevet :
07.04.82

(51) Int. Cl.³ : **F 03 B 13/12**

(21) Numéro de dépôt : **80400415.8**

(22) Date de dépôt : **28.03.80**

(54) **Dispositif pour transformer l'énergie d'un fluide en mouvement.**

(30) Priorité : **29.03.79 FR 7907959**

(43) Date de publication de la demande :
**15.10.80 (Bulletin 80/21)**

(45) Mention de la délivrance du brevet :
**07.04.82 Bulletin 82/14**

(84) Etats contractants désignés :
**AT BE CH DE FR GB IT LU NL SE**

(56) Documents cités :
FR - A - 390 576
FR - A - 2 359 744
GB - A - 745 084
GB - A - 1 447 758
GB - A - 1 449 740
US - A - 1 823 169

(73) Titulaire : **de la Roche Kerandraon, Olivier**
**18 rue de Gravell**
**F-75012 Paris (FR)**

**Guillaume, Pierre**
**30 rue Boissière**
**F-75116 Paris (FR)**

**Paroldi, Daniel**
**24 rue Pierre Larousse**
**F-75014 Paris (FR)**

(72) Inventeur : **de la Roche Kerandraon, Olivier**
**18 rue de Gravell**
**F-75012 Paris (FR)**
Inventeur : **Guillaume, Pierre**
**30 rue Boissière**
**F-75116 Paris (FR)**
Inventeur : **Paroldi, Daniel**
**24 rue Pierre Larousse**
**F-75014 Paris (FR)**

(74) Mandataire : **Bouju, André**
**38 Avenue de la Grande Armée**
**F-75017 Paris (FR)**

Imprimerie Jouve, 18, rue St-Denis, 75001 Paris, France

EP 0 017 569 B1

## Dispositif pour transformer l'énergie d'un fluide en mouvement

La présente invention concerne un dispositif pour transformer l'énergie d'un fluide en mouvement en énergie mécanique, et notamment l'énergie des masses d'eau de la mer.

Dans les dispositifs connus de ce genre, visant par exemple à capter l'énergie des vagues par des turbines, le problème essentiel à résoudre est celui du changement de sens périodique de l'eau.

La solution généralement adoptée consiste à fixer des aubages mobiles en rotation autour d'axes perpendiculaires à un arbre de transmission, de manière à réaliser une sorte d'hélice à pas variable susceptible de s'inverser. Il est connu d'obtenir cette inversion de pas automatiquement en situant le centre de poussée sur l'aubage en dehors de l'axe de rotation de cet aubage. A chaque inversion du sens de poussée de l'eau, l'aubage commence par basculer dans le sens convenable.

La limitation de l'amplitude d'oscillation de l'aubage peut s'obtenir par des butées fixes. Mais on obtient alors une hélice à pas constant (au sens près), qui ne procure pas le rendement optimal quand le flux d'eau varie. On peut aussi prévoir des ressorts tendant à s'opposer à l'oscillation. L'inclinaison des aubages est alors fonction du flux d'eau, mais l'inclinaison optimale n'est obtenue que de façon très imparfaite. En outre, il s'agit d'une réalisation très fragile, pratiquement incompatible avec un fonctionnement en mer.

La présente invention vise à réaliser un dispositif de captation d'énergie qui procure constamment un rendement d'aubage optimal, tout en étant d'une construction robuste et économique.

Suivant l'invention, le dispositif pour transformer l'énergie d'un fluide en mouvement vertical alternatif en énergie mécanique comprend un rotor formé par un arbre portant des axes transversaux sur chacun desquels est monté rotativement un aubage profilé, permettant ainsi la variation de l'inclinaison de ces aubages par rapport à l'arbre, notamment sous l'effet de variations de vitesse du fluide, et il est caractérisé en ce que ces aubages comprennent des moyens de lestage et/ou de flottaison de masse et de position prédéterminées pour leur conférer une fonction d'aile planante relativement au fluide, dont l'incidence s'adapte automatiquement à la vitesse du fluide.

Non seulement on évite ainsi l'emploi de butées ou de ressort, ou de tout dispositif limiteur de course, mais encore on est assuré que l'aubage prendra l'inclinaison optimale sous l'effet d'un courant de fluide parallèle à l'arbre, pour conférer à la machine un rendement optimal.

Suivant une réalisation avantageuse de l'invention, les moyens de lestage comprennent une masselotte fixée à l'aubage par un poteau. Ces masselottes peuvent suffire à localiser le centre de gravité de l'aubage en vue d'obtenir le résultat cherché.

On peut également prévoir sur chaque aubage un flotteur qui, dans un fonctionnement sous-marin, complète ou remplace l'action de la masselotte.

Suivant une réalisation préférée de l'invention, plusieurs aubages sont montés rotativement sur un même axe indépendants les uns des autres en rotation, et portent chacun un lest prédéterminé.

La vitesse linéaire des divers aubages variant suivant leur distance à l'arbre, chacun d'eux prend son incidence optimale fonction de cette vitesse, indépendamment des autres, et l'ensemble se rapproche de la forme d'un hélicoïde idéal.

Suivant une réalisation perfectionnée de l'invention, les aubages sont répartis en plusieurs rotors étagés le long de l'arbre, l'arbre comprenant un nombre correspondant d'éléments tubulaires coaxiaux indépendants les uns des autres en rotation et reliés chacun à un rotor.

La récupération d'énergie se trouve ainsi multipliée de façon économique. On peut en outre faire tourner les divers étages dans des sens différents pour éliminer les couples de réaction.

Suivant une première forme d'application de l'invention, l'arbre est relié par une transmission mécanique à une génératrice électrique logée dans une enceinte étanche flottante et, en service, il s'étend verticalement au-dessous de ladite enceinte.

L'enceinte suit les mouvements de la houle en surface et entraîne les aubages suivant un mouvement ascensionnel alternatif dans l'eau calme en profondeur.

Suivant une seconde forme d'application de l'invention, l'arbre est relié par une transmission mécanique à une génératrice électrique, l'ensemble étant logé au sec dans une cheminée flottante et lestée, ouverte à l'atmosphère à sa partie supérieure et communiquant par sa partie inférieure avec une nappe d'eau à niveau variable.

Cette nappe peut avantageusement être constituée par la surface de la mer. L'intermédiaire de l'air met le dispositif à l'abri des agressions mécaniques et corrosives de l'eau de mer.

Suivant une réalisation perfectionnée de l'invention, le dispositif comprend un certain nombre de pales périphériques parallèles à l'arbre et s'étendant radialement par rapport à celui-ci.

Ces pales radiales s'opposent à la rotation de l'ensemble en réaction à la rotation des aubages.

De préférence, les pales sont reliées à un mécanisme d'orientation asservi à un détecteur d'azimut à point de consigne télécommandé.

En animant les pales, on peut faire déplacer l'ensemble dans la mer, par télécommande, pour choisir à tout instant le site préférable.

D'autres particularités et avantages de l'invention ressortiront encore de la description détaillée qui va suivre.

Aux dessins annexés, donnés à titre d'exemples non limitatifs :

la figure 1 est une vue en perspective, avec arraché partiel, d'un dispositif conforme à l'invention ;

la figure 2 est une vue en perspective, à plus grande échelle et partiellement éclatée, d'un rotor ;

la figure 3 est une vue en plan d'un aubage ;

la figure 4 est une vue de côté d'un aubage, suivant IV-IV de la figure 3 ;

la figure 5 est une vue en coupe horizontale d'un rotor dans une variante de réalisation de l'invention ;

la figure 6 est une vue en perspective analogue à la figure 1, dans une autre variante de réalisation ;

la figure 7 est une vue en coupe verticale d'une autre réalisation de l'invention ;

la figure 8 est une vue en coupe verticale semi-schématique d'une réalisation particulière de l'invention ;

la figure 9 est une vue en plan suivant IX-IX de la figure 8.

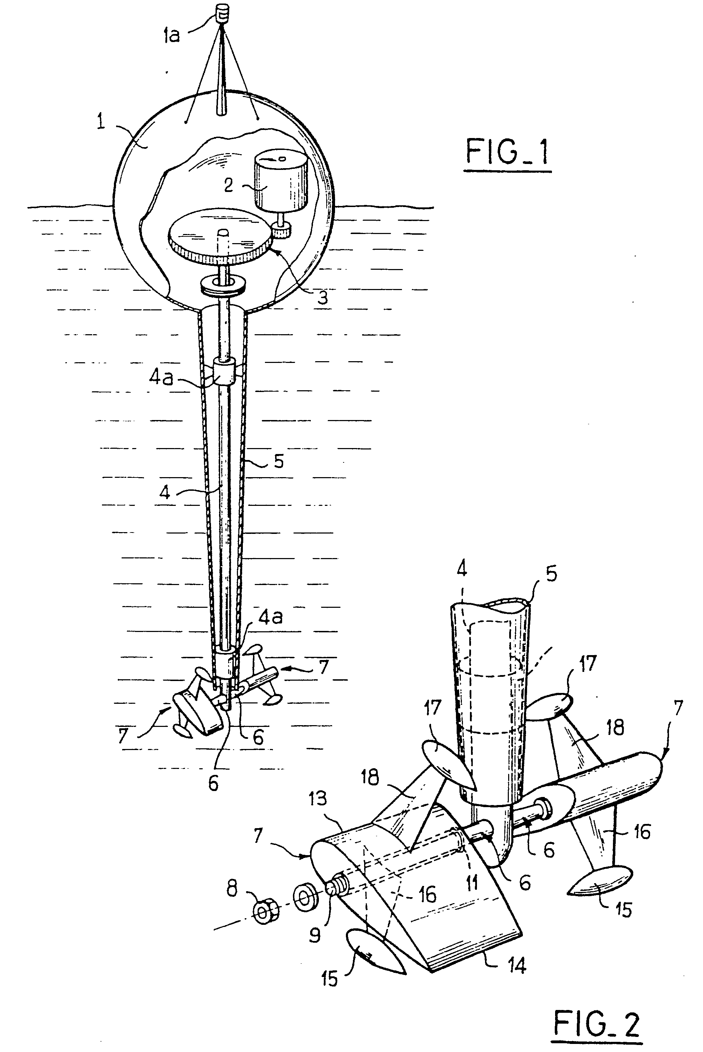

En référence aux figures 1 à 4, un dispositif conforme à l'invention, représenté flottant sur la mer (figure 1), comprend une enceinte étanche 1 surmontée d'une balise 1a et dans laquelle est logée une génératrice électrique 2 reliée par une transmission mécanique 3 à un arbre 4 situé dans un prolongement 5 de l'enceinte 1. En position de fonctionnement, l'arbre 4 s'étend verticalement vers le fond de la mer et il est porté par des paliers 4a fixés sur le prolongement 5.

L'arbre 4 sort en bout du prolongement 5 par l'intermédiaire de moyens d'étanchéité d'un type connu et porte sur son extrémité deux axes transversaux 6 dans le prolongement l'un de l'autre, sur chacun desquels est monté rotativement un aubage 7 profilé, suivant un assemblage à frottement doux. L'aubage est maintenu en place par un écrou 8 vissé sur une extrémité filetée, de l'axe 6, l'aubage prenant par ailleurs appui sur un épaulement 11 de l'axe 6 par l'intermédiaire d'une rondelle 12.

L'axe de rotation de l'aubage 7 ne passe pas par le centre de poussée de l'aubage mais est situé plus près du bord d'attaque 13 que du bord de fuite 14, de sorte qu'un courant d'eau parallèle à l'arbre 4 tend à faire tourner l'aubage autour de l'axe 6.

Sur sa face inférieure (en position de fonctionnement), une masselotte profilée 15 est fixée par l'intermédiaire d'un poteau 16. De même, sur la face supérieure est fixé un flotteur profilé 17 par l'intermédiaire d'un poteau 18.

La masse de la masselotte 15 et le volume du flotteur 17, ainsi que leurs emplacements, sont déterminés conformément aux lois de l'hydrodynamique pour conférer à l'aubage 7 une structure d'aile planante prenant automatiquement, dans un fluide en mouvement relatif, une incidence qui est fonction de sa vitesse relative par rapport au fluide.

Le dispositif fonctionne de la manière suivante :

L'eau étant supposée immobile, les aubages 7 se placent horizontalement sous l'effet des masselottes et des flotteurs.

Si la mer est animée d'un mouvement de houle, ce mouvement, qui n'affecte que les masses d'eau voisines de la surface, entraîne par flottaison un mouvement alternatif du dispositif. Les aubages 7, qui se situent dans les masses d'eau profondes non affectées par le mouvement de houle, sont donc soumis à un flux relatif d'eau alternatif parallèle à l'arbre 4.

Sous l'effet de ce flux, les aubages 7 commencent à basculer comme indiqué plus haut. Ils forment alors des pales d'hélice qui entraînent l'arbre 4 en rotation. Les aubages présentent alors vis-à-vis de l'eau une composante verticale de vitesse relative et une composante horizontale suivant une trajectoire circulaire. Etant donné leur structure d'aile planante, ils prennent alors spontanément une incidence résultant des lois de l'hydrodynamique.

Quand le mouvement de houle s'inverse, l'inversion de la composante verticale provoque le basculement des aubages, ce qui inverse le pas de l'hélice, et l'arbre 4 continue de tourner dans le même sens.

Sans aucun moyen mécanique de limitation de course, les aubages prennent spontanément une incidence optimale, qui résulte des lois de l'hydrodynamique, ce qui assure un rendement d'aubage optimal.

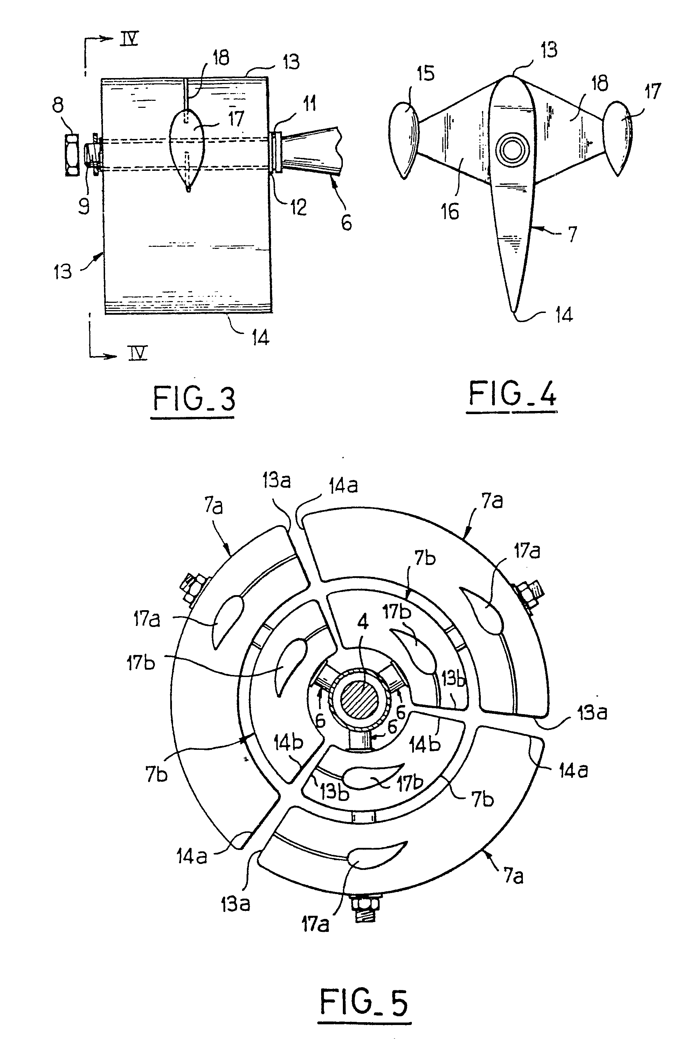

On va maintenant décrire, en référence à la figure 5, une réalisation perfectionnée de l'invention.

L'arbre 4 porte ici trois axes 6 décalés de 120° l'un par rapport à l'autre et, sur chacun de ces axes sont montés deux aubages 7a, 7b qui se suivent à partir de l'arbre 4. En outre, ces aubages sont découpés en forme de segments annulaires, de manière à couvrir pratiquement toute la périphérie du rotor, le bord d'attaque 13a (ou 13b) de chacun d'eux étant voisin du bord de fuite 14a (ou 14b) de l'aubage voisin.

Comme dans la réalisation précédente, les aubages portent des flotteurs 17a, 17b, ainsi que des masselottes (non représentées).

Le découpage annulaire présente l'avantage que toute la section du flux d'eau passe à travers les aubages pour céder son énergie.

En outre, deux aubages 7a et 7b articulés sur un même axe 6 présentent, en fonctionnement, des vitesses ayant des composantes horizontales différentes et ces aubages prennent des incidences différentes en fonction de ces composantes. L'ensemble de ces deux aubages présente alors une structure voisine de celle d'un hélicoïde idéal.

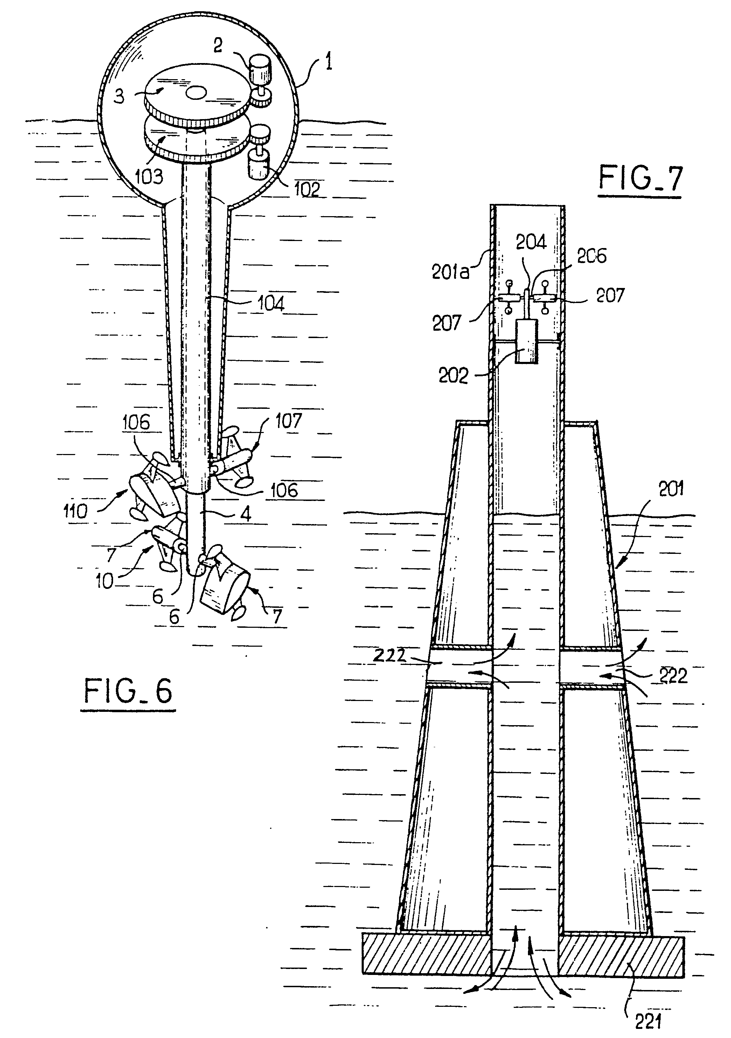

Suivant la réalisation représentée à la figure 6, les parties tournantes peuvent avantageusement être réparties en plusieurs rotors. Un rotor (10) comprend des aubages 7 fixés sur des axes 6 comme indiqué plus haut, ces axes étant fixés sur un arbre 4. D'autre part, des aubages 107 sont fixés sur des axes 106 eux-mêmes fixés à un arbre 104 creux et coaxial à l'arbre 4 pour constituer un second rotor 110. L'enceinte 1 contient alors deux génératrices électriques 2, 102 reliées respectivement par des transmissions mécaniques 3, 103 aux arbres 4, 104.

Les aubages 7, 107 sont respectivement montés sur les axes 6, 106 de manière que les rotors 10 et 110 tournent en sens inverse l'un de l'autre, ce qui élimine le couple de réaction.

On va maintenant décrire, en référence à la figure 7, une variante de réalisation de l'invention.

Une cheminée 201 est réalisée de manière à flotter dans l'eau. Dans l'exemple décrit, cette cheminée est creuse et elle est munie à sa base d'un lest 221 destiné notamment à la maintenir en position verticale.

On sait que, placé dans une masse d'eau animée de mouvements ascensionnels alternatifs, un tel dispositif tend à rester immobile sous l'effet de son inertie, suivant le principe dit de la « perche de Froude ».

Dans un prolongement 201a de la cheminée 201 est fixée une génératrice électrique 202 comportant un arbre 204 auquel sont fixés des axes 206 portant des aubages 207 suivant des dispositions analogues à celles décrites précédemment.

La cheminée 201 est ouverte à ses deux extrémités et comporte également des ouvertures latérales 222. En outre, le lest 221 est calculé pour que la partie supérieure de la cheminée émerge assez largement, notamment le prolongement 201a, la génératrice 202 et les aubages 207.

En fonctionnement, le mouvement de la houle provoque des variations du niveau d'eau dans la cheminée 201, qui reste sensiblement immobile comme indiqué plus haut, l'eau entrant et sortant par l'ouverture inférieure et par les ouvertures latérales 222. Ces variations provoquent à leur tour un mouvement alternatif de l'air dans le prolongement 201a, qui agit sur les aubages 207 pour faire tourner l'arbre 204.

Bien entendu, cette réalisation peut bénéficier de tout ou partie des perfectionnements décrits plus haut.

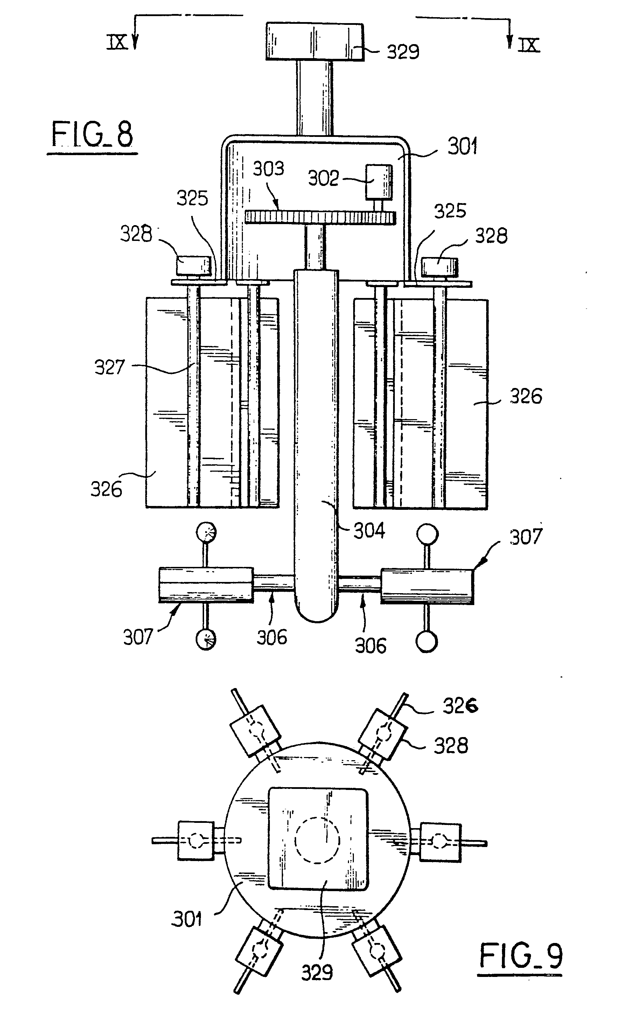

On va maintenant décrire, en référence aux figures 8 et 9, un perfectionnement supplémentaire de l'invention.

Comme dans les réalisations précédentes, une enceinte 301 flottante contient une génératrice 302 reliée par une transmission mécanique 303 et un arbre 304 sur lequel sont fixés des axes 306 portant des aubages 307.

L'enceinte 301 est munie d'un certain nombre de supports périphériques 325 régulièrement répartis sur lesquels sont montées rotativement des pales 326 par l'intermédiaire d'arbres 327. Ces pales s'étendent verticalement à partir des supports 325.

Chaque arbre 327 est relié à un moteur pas à pas 328 dont la carcasse est fixée sur le support 325, de manière à pouvoir orienter la pale correspondante. Les moteurs 328 sont reliés électriquement, par une liaison non représentée, à un détecteur d'azimut 329 fixé sur l'enceinte 301. Ce détecteur, qui peut être un compas magnétique ou gyroscopique, est muni d'un point de consigne télécommandé par ondes radio-électriques.

En fonctionnement, une direction d'azimut est affichée par radio sur le détecteur 329 qui commande, suivant une programmation d'un type connu, les moteurs 328 pour animer les pales 326 d'un mouvement qui provoque le déplacement de l'ensemble du dispositif dans la direction d'azimut choisie.

On peut ainsi à tout instant faire déplacer le dispositif dans une région de la mer plus favorable. A l'immobilisation, les pales sont disposées radialement (figure 9) pour produire un effet anti-rotation.

## Revendications

1. Dispositif pour transformer l'énergie d'un fluide en mouvement vertical alternatif en énergie mécanique, comprenant un rotor formé par un arbre (4) portant des axes transversaux (6) sur chacun desquels est monté rotativement un aubage profilé (7), permettant ainsi la variation de l'inclinaison de ces aubages (7) par rapport à l'arbre (4), notamment sous l'effet de variations de vitesse du fluide, caractérisé en ce que ces aubages (7) comprennent des moyens (15, 17) de lestage et/ou de flottaison de masse et de position prédéterminées pour leur conférer une fonction d'aile planante relativement au fluide, dont l'incidence s'adapte automatiquement à la vitesse du fluide.

2. Dispositif conforme à la revendication 1, caractérisé en ce que les moyens de lestage comprennent une masselotte (15) fixée à l'aubage par un poteau (16).

3. Dispositif conforme à l'une des revendications 1 ou 2, caractérisé en ce que les moyens de flottaison comprennent un flotteur (17) fixé à l'aubage par un poteau (18).

4. Dispositif conforme à l'une des revendications 1 à 3, caractérisé en ce que plusieurs aubages (7a, 7b) sont montés rotativement sur un même axe (6), indépendants les uns des autres en rotation, et portent chacun un lest prédéterminé.

5. Dispositif conforme à l'une des revendications 1 à 4, caractérisé en ce que les aubages (7, 107) sont répartis en plusieurs rotors (10, 110) étagés le long de l'arbre, l'arbre comprenant un nombre correspondant d'éléments tubulaires coaxiaux (4, 104) indépendants les uns des autres en rotation et reliés chacun à un rotor (10, 110).

6. Dispositif conforme à l'une des revendications 1 à 5, caractérisé en ce que l'arbre (4) est relié par une transmission mécanique (3) à une génératrice électrique (2) logée dans une enceinte (1) étanche flottante et en ce qu'en service il s'étend verticalement au-dessous de ladite enceinte.

7. Dispositif conforme à l'une des revendications 1 à 5, caractérisé en ce que l'arbre (204) est relié par une transmission mécanique (203) à une génératrice électrique (202), l'ensemble étant logé au sec dans une cheminée (201, 201a) flottante et lestée, ouverte à l'atmosphère à sa partie supérieure et communiquant par sa partie inférieure avec une nappe d'eau à niveau variable.

8. Dispositif conforme à la revendication 6, caractérisé en ce qu'il comprend un certain nombre de pales périphériques (326) parallèles à l'arbre (304) et s'étendant radialement par rapport à celui-ci.

9. Dispositif conforme à la revendication 8, caractérisé en ce que les pales (326) sont reliées à un mécanisme d'orientation (328) asservi à un détecteur d'azimut (329) à point de consigne télécommandé.

10. Dispositif conforme à la revendication 1, caractérisé en ce que l'arbre (4) porte au moins un axe (6) sur lequel sont montés rotativement au moins deux aubages profilés (7), chacun d'eux portant une masselotte (15) et un flotteur (17) pour lui conférer une fonction d'aile planante.


## Claims

1. A device to convert the energy of a fluid in alternative vertical motion into mechanical energy, comprising a rotor formed by a shaft (4) bearing transverse axles (6) on each of which is mounted a streamlined panel (7), thus permitting the variation of the tilt of these panels (7) with respect to the shaft (4), notably under the effect of variations in speed of the fluid, characterised in that said panels (7) comprise ballast and/or floating means (15, 17) of predetermined mass and position so as to confer on them a planing wing function relative to the fluid, whose incidence is adapted automatically to the speed of the fluid.

2. A device according to claim 1, characterised in that the ballast means comprise a weight (15) fixed to the panel by a post (16).

3. A device according to any one of claims 1 or 2, characterised in that the floating means comprise a float (17) fixed to the panel by a post (18).

4. A device according to anyone of claims 1 to 3, characterised in that several panels (7a, 7b) are rotatably mounted on the same axle (6), independent of one another in rotation, and each of them bears a predetermined ballast.

5. A device according to anyone of claims 1 to 4, characterised in that the panels (7, 107) are distributed on several rotors (10, 110) staged along said shaft, said shaft comprising a corresponding number of coaxial tubular elements (4, 104) independent of one another in rotation and each connected to a rotor (10, 110).

6. A device according to anyone of claims 1 to 5, characterised in that said shaft (4) is connected by a mechanical transmission (3) to an electric generator (2) housed in a floating sealed chamber (1), said shaft extending vertically below said chamber in operation.

7. A device according to anyone of claims 1 to 5, characterised in that the shaft (204) is connected by a mechanical transmission (203) to an electric generator (202), the whole being housed dry in a floating and ballasted funnel (201, 201a), open to the atmosphere at its upper part and communicating by its lower part with a sheet of water of variable level.

8. A device according to claim 6, characterised in that it comprises a number of peripheral blades (326) parallel to the shaft (304) and extending radially with respect to the latter.

9. A device according to claim 8, characterised in that the blades (326) are connected to an orienting mechanism (328) servo-coupled to an azimuth detector (329) with a remote-controlled set point.

10. A device according to claim 1, characterised in that the shaft (4) bears at least one axle (6) on which are rotatably mounted at least two profiled panels (7), each of them bearing a weight (15) and a float (17) to confer on it a planing wing function.


## Ansprüche

1. Vorrichtung zur Umwandlung der Energie eines vertikal auf- und abbewegten Fluids in eine mechanische Energie, mit einem durch eine Welle (4) gebildeten Rotor, die transversale Achsen (6) trägt, auf denen jeweils eine profilierte Schaufel (7) drehbar gelagert ist und die eine Änderung der Neigung der Schaufeln (7) in Bezug auf die Welle (4) erlaubt, insbesondere in Abhängigkeit von Geschwindigkeitsänderungen des Fluids, dadurch gekennzeichnet, daß die Schaufeln (7) Ballast- und/oder Schwimmitel (15, 7) mit einer Masse und in einer Lage aufweisen, die ihnen die Funktion eines relativ zum Fluid schwebenden Flügels verleihen, dessen Stellung sich automatisch an die Strömungsgeschwindigkeit des Fluids anpaßt.

2. Vorrichtung nach Anspruch 1, dadurch gekennzeichnet, daß die Ballastmittel einen Lastkörper (15) aufweisen, der mittels eines Gestänges (16) an der Schaufel (7) angebracht ist.

3. Vorrichtung nach Anspruch 1 oder 2, dadurch gekennzeichnet, daß die Schwimmittel einen Schwimmkörper (17) aufweisen, der mittels eines Gestänges (18) an der Schaufel (7) angebracht ist.

4. Vorrichtung nach einem der Ansprüche 1 bis 3, dadurch gekennzeichnet, daß mehrere Schaufeln (7a, 7b) drehbar an derselben Achse (6) befestigt sind, deren Rotation unabhängig voneinander ist und die jeder ein vorbestimmtes Ballast-/Schwimmitel tragen.

5. Vorrichtung nach einem der Ansprüche 1 bis 4, dadurch gekennzeichnet, daß die Schaufeln (7, 107) auf mehrere Rotoren (10, 110) verteilt sind, die auf der Länge der Welle (104) übereinander angeordnet sind, und daß die Welle eine entsprechende Anzahl von koaxialen Rohrstücken (4, 104) aufweist, deren Rotation voneinander unabhängig ist und die mit je einem Rotor (10, 110) verbunden sind.

6. Vorrichtung nach einem der Ansprüche 1 bis 5, dadurch gekennzeichnet, daß die Welle (4) über ein mechanisches Getriebe (3) mit einem elektrischen Generator (2) verbunden ist, der in einem dichten, schwimmenden Behälter (1) angeordnet ist, und daß sich die Welle (4) im Betriebszustand vertikal von dem Behälter (1) erstreckt.

7. Vorrichtung nach einem der Ansprüche 1 bis 5, dadurch gekennzeichnet, daß die Welle (204) über ein mechanisches Getriebe (203) mit einem elektrischen Generator (202) verbunden ist und daß diese Anordnung in einem schwimmenden und belasteten, nach oben zur Atmosphäre hin offenen Rohr (201, 201a) im Trockenen angeordnet ist, dessen oberer Teil mit dem unteren Teil kommuniziert, in dem sich eine in der Höhe variable Wasseroberfläche befindet.

8. Vorrichtung nach Anspruch 6, dadurch gekennzeichnet, daß eine Anzahl von am Umfang parallel zur Welle (204) angeordneten Blättern (326) vorgesehen ist, die sich radial von der Welle (304) erstrecken.

9. Vorrichtung nach Anspruch 8, dadurch gekennzeichnet, daß die Blätter (326) mit einer Verstellvorrichtung (328) verbunden sind, die in Abhängigkeit von einem Winkeldetektor (329) fernsteuerbar ist.

10. Vorrichtung nach Anspruch 1, dadurch gekennzeichnet, daß an der Welle (4) mindestens eine Achse angebracht ist, auf der wenigstens zwei profilierte Schaufeln (7) drehbar angeordnet sind, wobei jede Schaufel einen Ballast-(15) und einen Schwimmkörper (7) trägt, die ihr die Funktion eines schwebenden Flügels verleihen.

0 017 569

FIG_1

FIG_2

FIG_3

FIG_4

FIG_5

FIG_6

FIG_7

FIG_8

329

301

303    302

325

328    325    328

327

326

326

304

307

307    306    306

326

328

301

329    FIG_9

4